# EUROPÄISCHE PATENTSCHRIFT

(11) **EP 3 381 588 B1**
(45) Veröffentlichungstag und Bekanntmachung des Hinweises auf die Patenterteilung: **11.12.2019**
(21) Anmeldenummer: 18163827.1
(22) Anmeldetag: 26.03.2018
(51) Int. Cl.: C04B 35/573, B22D 41/54, B22D 41/60, C04B 35/565, F27D 3/14

(54) **GIESSSYSTEM ZUM GIESSEN VON KUPFERSCHMELZEN**
CASTING SYSTEM FOR CASTING OF COPPER MELTS
SYSTÈME DE COULÉE POUR DU CUIVRE FONDU

(30) Priorität: 27.03.2017 DE 102017106456
(43) Veröffentlichungstag der Anmeldung: 03.10.2018
(73) Patentinhaber: KME Mansfeld GmbH, 06333 Hettstedt (DE)
(72) Erfinder: Busch, Hendrik, 06456 Arnstein- OT Wiederstedt (DE); Weber, Elisabeth, 06116 Halle (Saale) (DE); Schwedler Olaf, 39130 Magdeburg (DE)
(74) Vertreter: Griepenstroh, Jörg

(56) Entgegenhaltungen:
- EP-A1- 1 946 866
- EP-A1- 2 861 340

## Beschreibung

Die Erfindung betrifft ein Gießsystem zum Gießen von Kupferschmelzen, insbesondere zum Gießen von phosphorhaltigen Kupferschmelzen mit einem Phosphoranteil größer 80ppm, wobei das Gießsystem wenigstens zwei Keramikrohre mit jeweils einer Eingießöffnung und einer Auslassöffnung aufweist, wobei in die Eingießöffnungen eingegossene Kupferschmelze durch das jeweilige Keramikrohr zur jeweiligen Auslassöffnung transferierbar ist und das jeweilige Keramikrohr mindestens einen Keramikanteil von 80,0Gew.% und einen elektrischen Leitfähigkeitszusatz aufweist, sodass das jeweilige Keramikrohr elektrisch leitfähig ist, und wobei insbesondere das jeweilige Keramikrohr im Wesentlichen frei von Eisen oder Eisenverbindungen ist.

Um flüssiges Kupfer der weiteren Verarbeitung, beispielsweise zu Drähten oder Flachmaterialien zuzuführen, werden sogenannte Gießrohre oder Gießsysteme verwendet. Gattungsgemäße Gießrohre und Gießsysteme sind in der EP 1 506 827 B1, EP 1 946 866 A1 und WO 01/58 816 A1 beschrieben. In diese Gießrohre wird das Kupfer eingefüllt und durch die Gießrohre hindurch zum gewünschten Ort transferiert. Das Ende dieser Gießrohre befindet sich sehr häufig in einem flüssigen Kupferreservoir, welches dann direkt die nachfolgenden Einheiten speist.

Derartige Rohre werden meist aus eisenhaltigen Materialien, wie beispielsweise Stähle oder Edelstahl gefertigt. Dies liegt daran, dass die Rohre vor dem Befüllen mit Kupferschmelze temperiert werden müssen, da ansonsten die eingefüllte Kupferschmelze im Rohr erstarrt und das Rohr somit nicht mehr seine Funktion erfüllen kann. Somit werden derartige Rohre mittels Strom erhitzt, sodass den Rohren eine Temperatur aufprägbar ist.

Sehr häufig sind bei Kupfermaterialien hohe Phosphorwerte gefordert. So sollen insbesondere einige Kupferqualitäten 200ppm oder mehr Phosphoranteil aufweisen. Dieses Phosphor führt jedoch dazu, dass Stähle oder entsprechend der Eisenanteil in dem Rohr beeinflusst wird, sodass das Rohr aufgrund von Korrosion porös wird und zeitig ausgetauscht werden muss.

Ein Formkörper mit einer Siliziumcarbid-Stützmatrix mit integrierter Kohlenstoffstruktur ist in der DE 10 2014 216 433 A1 offenbart. In der WO 2013/185223 A1 ist ein Transport- und Gießbehälter für flüssige Metalle offenbart.

Aufgabe der Erfindung ist es den Stand der Technik zu verbessern.

Gelöst wird die Aufgabe durch ein Gießsystem zum Gießen von Kupferschmelzen, insbesondere zum Gießen von phosphorhaltigen Kupferschmelzen mit einem Phosphoranteil größer 80 ppm, wobei das Gießsystem wenigstens zwei Keramikrohre mit jeweils einer Eingießöffnung und einer Auslassöffnung aufweist, wobei in die Eingießöffnung eingegossene Kupferschmelze durch das jeweilige Keramikrohr zur jeweiligen Auslassöffnung transferierbar ist und das jeweilige Keramikrohr mindestens ein Keramikanteil von 80,0 Gewichtsprozent und einen elektrischen Leitfähigkeitszusatz aufweist, sodass das jeweilige Keramikrohr elektrisch leitfähig ist und wobei insbesondere das jeweilige Keramikrohr im Wesentlichen frei von Eisen oder Eisenverbindungen ist, wobei das jeweilige Keramikrohr eine obere elektrische Leiteraufnahme und untere elektrische Leiteraufnahme aufweist und die beiden Keramikrohre jeweils an der oberen elektrischen Leiteraufnahme oder jeweils an der unteren elektrischen Leiteraufnahme elektrisch leitend mittels einer elektrischen Leitverbindung miteinander verbunden sind.

Ein Kern der Erfindung beruht darauf ein Gießrohr zum transferieren flüssigen Kupfers im Wesentlichen aus einer Keramik zu fertigen, welche elektrisch leitende Anteile/Bestandteile aufweist, sodass durch Fließen eines Stromes durch das leitfähige Keramikrohr das Keramikrohr erhitzt wird. Somit ist eine Verwendung derartiger leitfähiger keramischer Gießrohr zum leiten metallischer Schmelzen beschrieben.

Aufgrund dessen, dass kein Eisen oder im wesentlichen keine oder vernachlässigbare geringe Mengen an eisenhaltigen Komponenten verwendet werden, können diese Bestandteile auch nicht herausgelöst bzw. das Keramikrohr porös werden und die Einsatzdauer derartiger Gießrohre verlängert sich wesentlich.

Ein weiterer Kern der Erfindung liegt darin, dass die beiden Keramikrohre mittels einer elektrischen Leitverbindung miteinander verbunden sind. Somit kann über beide Keramikrohre ein Stromfluss realisiert werden, welcher die Keramikrohre auf eine entsprechende Arbeitstemperatur erwärmt. Besonders vorteilhaft ist es, wenn die elektrische Leitverbindung aus demselben Material wie die Metallschmelze besteht, sodass bei einem Kontaktieren mit der Schmelze sich das Material mit der Schmelze durch Verflüssigung vereinigt und weiterhin der Stromfluss -über die Metallschmelze- geschlossen ist.

### Folgendes Begriffliche sei erläutert

Ein "Gießsystem" ist eine Vorrichtung, über welche eine Metallschmelze, wie beispielsweise eine Kupferschmelze gerichtet geführt werden kann. Das Gießsystem ist dabei insbesondere geneigt angeordnet, sodass bei einem Einführen der Metallschmelze diese Metallschmelze aufgrund der Gravitationswirkung fließend geführt wird.

Unter "Gießen" ist ein Fertigungsverfahren zu verstehen, bei dem Flüssigkeiten, Pasten oder Brei in Formen gefüllt werden und dort erstarren. Vorliegend umfasst der Gießen zusätzlich das flüssige Transferieren einer Metallschmelze.

Eine "Kupferschmelze" ist ein viskoses Medium, welches als Hauptbestandteil elementares Kupfer (Cu) aufweist. Sofern die Kupferschmelze einen Anteil von größer 80ppm an elementaren Phosphor (P) aufweist wird vorliegend von einer phosphorhaltigen Kupferschmelze gesprochen.

Die "Keramikrohre" umfassen sowohl rohrförmige als auch teilrohrförmige Transporteinrichtungen. Diese können beispielsweise auch als Rinne oder auch als Mischformen ausgebildet sein. Als Keramikbestandteil kann beispielsweise Siliziumkarbid eingesetzt werden.

Eine "Eingießöffnung" ist der Bereich des Keramikrohres, in den die Metallschmelze in das Gießsystem oder entsprechend in das Keramikrohr eingeführt/eingegossen wird. Dieses kann beispielsweise trichterförmig ausgestaltet sein und die Kupferschmelze umleiten. So ist beispielsweise die Eingießöffnung in einer vertikalen Richtung geöffnet, sodass mittels eines Tiegels eine Metallschmelze eingeführt werden kann. Anschließend folgt ein gebogenes Rohrstück, welches an seinem Ende leicht schräg ausgeführt ist.

Die "Auslassöffnung" des Keramikrohres überführt die Metallschmelze, welche in die Eingießöffnung gegossen wurde, an den eigentlichen Zielort. Beispielsweise kann die Auslassöffnung als Tülle ausgestaltet sein.

Der "elektrische Leitfähigkeitszusatz" ermöglicht, dass grundsätzlich isolierende Keramiken elektrisch leitend werden. Dies kann beispielsweise durch freien Kohlenstoff oder freies Silizium realisiert werden.

Unter "im Wesentlichen frei von Eisen oder Eisenverbindungen" wird verstanden, dass die Funktion der Keramikrohre sowohl in ihrer Eigenschaft als elektrische Leiter als auch zum Transferieren von Kupferschmelzen von der Eingießöffnung zur Auslassöffnung durch etwaige Eisenanteile nicht eingeschränkt wird.

Die "untere und obere elektrische Leiteraufnahme" realisiert die elektrische Verbindung zum leitfähigen Keramikmaterial. Dies kann beispielsweise durch das Anklemmen oder Anschrauben eines Endes der elektrischen Leitverbindung am Ort der unteren elektrischen Leiteraufnahme und/oder am Ort der oberen elektrischen Leiteraufnahme realisiert werden.

Die "elektrische Leitverbindung" ist beispielsweise ein Kupferbügel, welcher jeweils an der oberen elektrischen Leiteraufnahme der beiden Keramikrohre oder an der unteren elektrischen Leiteraufnahme der Keramikrohre angeordnet wird. Durch diese elektrische Leitverbindung sind die beiden Keramikrohre miteinander elektrisch leitend verbunden.

In einer weiteren Ausgestaltung weist das Gießsystem drei, vier, fünf oder mehr Keramikrohre auf, wobei die drei, vier, fünf oder weiteren Keramikrohre jeweils eine Eingießöffnung und eine Auslassöffnung aufweisen, wobei in die Eingießöffnungen eingegossene Kupferschmelze durch das jeweilige Keramikrohr zur jeweiligen Auslassöffnung transferierbar ist und das jeweilige Keramikrohr mindestens einen Keramikanteil von 80Gew.% und einen elektrischen Leitfähigkeitszusatz aufweist, sodass das jeweilige Keramikrohr elektrisch leitfähig ist und wobei insbesondere das jeweilige Keramikrohr im Wesentlichen frei von Eisen oder Eisenverbindungen ist und die drei, vier, fünf oder weiteren Keramikrohre jeweils eine obere elektrische Leiteraufnahme und/oder eine unter elektrische Leiteraufnahme aufweisen und die Keramikrohre jeweils an der oberen elektrischen Leiteraufnahme elektrisch leitend mittels jeweils einer elektrischen Leitverbindung miteinander verbunden sind.

Durch die erhöhte Anzahl von Keramikrohren kann die Menge der zu transferierenden Kupferschmelze erhöht oder räumlich verteilt werden.

Aufgrund dessen, dass sämtliche Keramikrohre mittels Strom beaufschlagt und erwärmt werden können, kann somit für alle Keramikrohre verhindert werden, dass Kupferschmelze an diesen erstarrt und gegebenenfalls dadurch ein Verringern eines Querschnitts die Durchflussmenge verringert.

Dabei können insbesondere die Keramikrohre im Wesentlichen parallel zueinander angeordnet sein.

Dabei ist Parallelität insbesondere auch dann gegeben, wenn ein Winkel zwischen zwei Keramikrohren in einem Bereich von -10° bis +10° liegt. Maßgeblich ist insbesondere eine Rohrmittellinie der jeweiligen Keramikrohre.

Um insbesondere mittels zweier Pole, welche an den jeweils äußeren Keramikrohren angeordnet sind, bei dem Gießsystem sämtliche Keramikrohre durch Strombeaufschlagung zu erwärmen, können zwei benachbarte Keramikrohre jeweils an der oberen elektrischen Leiteraufnahme oder jeweils an der unteren elektrischen Leiteraufnahme elektrisch leitend miteinander verbunden sein, sodass eine elektrische Leitverbindung vorliegt.

Insbesondere ist ein Keramikrohr, welches zwei benachbarte Keramikrohre aufweist, mit einem der Nachbarn an der jeweiligen oberen elektrischen Leiteraufnahme mittels der elektrischen Leitverbindung und mit dem anderen Nachbarn an der jeweils unteren elektrischen Leiteraufnahme mittels der elektrischen Leitverbindung elektrisch leitend verbunden.

In einer weiteren Ausführungsform werden der Keramikanteil der Keramikrohre durch Siliziumkarbid und der elektrische Leitfähigkeitszusatz der Keramikrohre durch Kohlenstoff oder freies Silizium gebildet. Somit kann ein optimales Material für die Keramikrohre bereitgestellt werden.

In einer diesbezüglichen Ausführungsform ist ein Anteil des Kohlenstoffs oder des freien Siliziums oder weist ein Anteil des Kohlenstoffs des freien Siliziums Konzentrationswerte zwischen 5,0Gew.% und 20,0Gew.%, insbesondere zwischen 8,0Gew.% und 16,0Gew.% auf.

Um insbesondere eine einfache Halterung für die elektrischen Leitverbindungen bereitzustellen, kann eines der Keramikrohre oder können mehrere der Keramikrohre oder sämtliche Keramikrohre Hinterschneidungen aufweisen.

Als "Hinterschneidung" wird insbesondere ein Konstruktionselement verstanden, welches frei am Keramikrohr angeordnet ist. Dabei kann dieses Element auch in das Keramikrohr hineinragen.

Um derartig komplizierte Konstruktionselemente bei dem Keramikrohren oder dem Gießsystem zu realisieren, kann eines der Keramikrohre, oder können mehrere der Keramikrohre oder können sämtliche Keramikrohre mittels 3D-Druck gefertigt sein.

In einer weiteren Ausführungsform weist eines der Keramikrohre oder weisen mehrere der Keramikrohre oder weisen sämtliche der Keramikrohre teilweise eine Öffnung auf, sodass das Keramikrohr oder die Keramikrohre an der Stelle der Öffnung eine Rinne bildet oder bilden.

Eine "Rinne" ist insbesondere eine Vorrichtung, welche das Herabfließen der Metallschmelze verhindert und ist dabei zumeist als linienförmige Vertiefung ausgestaltet. Vorliegend kann diese geneigt ausgestaltet sein.

Um das Gießsystem für Kupferschmelzen und dergleichen einzusetzen, kann die elektrische Leitverbindung oder können die elektrischen Leitverbindungen einen Kupferleiter oder einen mehrere Kupferleiter aufweisen.

Insbesondere für den Fall, dass ein Teil des Gießsystems, insbesondere auslassöffnungsseitig in ein Kupferreservoir eingetaucht ist, kann der Kupferleiter sich in dem Kupferreservoir auflösen, wobei weiterhin über das Kupferreservoir der Strom durch die Keramikrohre führbar ist.

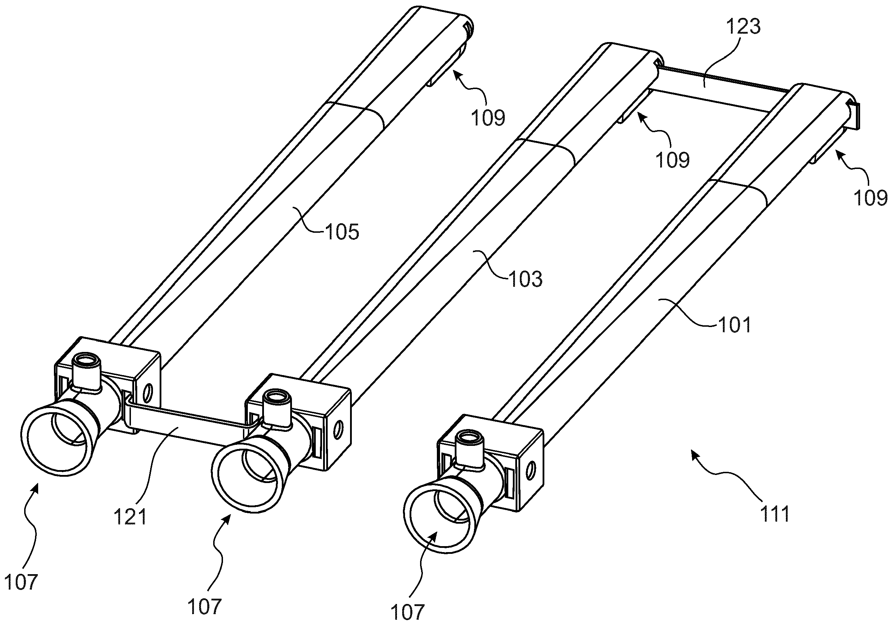

Im Weiteren wird die Erfindung anhand eines Ausführungsbeispiels näher erläutert. Es zeigt die einzige
- Figur 1: eine schematische perspektivische Darstellung eines erfindungsgemäßen Gießsystems mit drei Keramikrohren.

Ein Gießsystem 111 weist ein erstes Keramikrohr 101, ein zweites Keramikrohr 103 und ein drittes Keramikrohr 105 auf. Jedes der Keramikrohre 101, 103, 105 weist eine Eingießöffnung 107 und einen Kupferauslass 109 auf. Wird nun in den jeweiligen Eingießöffnungen 107 Kupfer eingegossen, so wird dieses durch den rohrförmigen Anteil innerhalb der Keramikrohre 101, 103, 105 zu dem jeweiligen Auslass 109 geführt, wo anschließend die Kupferschmelze in ein Kupferreservoir überführt wird.

Das zweite Keramikrohr 103 und das dritte Keramikrohr 105 weisen in der Nähe der Eingießöffnungen 107 eine obere Kupferleitung 121 auf, sodass zwischen dem zweiten Keramikrohr 103 und dem dritten Keramikrohr 105 eine elektrische Leitungsverbindung gegeben ist.

Das erste Keramikrohr 101 und das zweite Keramikrohr 103 weisen jeweils in der Nähe des Kupferauslasses 109 eine untere Kupferleitung 123 auf.

Wird nun jeweils in der Nähe der Eingießöffnungen 107 des ersten Keramikrohrs 101 und des zweiten Keramikrohrs 105 eine Spannung angelegt, so führt dies zu einem Stromfluss von dem ersten Keramikrohr 101 zum dritten Keramikrohr 105, sodass die Keramikrohre 101, 103, 105 erwärmt werden.

Vorliegend wird das Gießsystem mit einer Spannung versorgt und der entsprechende Stromfluss führt zu einer Erwärmung der Keramikrohre 101, 103, 105. Die Auslassöffnungen 109 werden in das Kupferreservat (nicht dargestellt) eingetaucht. Zudem wird dem Gießsystem 111 ein Gießwinkel von 30 Grad aufgeprägt, sodass eingefüllte Kupferschmelze in die Eingießöffnungen 107 aufgrund der Gravitation zu den Auslässen 109 geführt wird. Die untere Kupferleitung 123 wird sich innerhalb des Kupferreservoirs verflüssigen und das Gießen kann erfolgen.

Die vorliegenden Keramikrohre 101, 103, 105 sind jeweils im 3D-Druckverfahren aus Siliziumcarbid gefertigt worden. Es wird das Siliziumcarbid der Firma Schunk GmbH und Co. KG, Bahnhofstraße 106-134, 74348 Lauffen/Neckar, Deutschland verwendet. Das verwendete Material heißt IntrinSiC®. Dieses Material weist eine chemische Zusammensetzung von 85,0Gew.% Siliziumcarbid (SiC) und 15,0Gew.% Silizium (Si) auf. Dieses Silizium liegt als sogenanntes freies Silizium vor, welches vorliegend als Ladungsträger dient und somit den Stromfluss und mithin die Erwärmung ermöglicht.

### Bezugszeichenliste

- 101: erstes Keramikrohr
- 103: zweites Keramikrohr
- 105: drittes Keramikrohr
- 107: Eingießöffnung
- 109: Auslass
- 111: Gießsystem
- 121: obere Kupferleitung
- 123: untere Kupferleitung

## Patentansprüche

1. Gießsystem zum Gießen von Kupferschmelzen, insbesondere zum Gießen von phosphorhaltigen Kupferschmelzen mit einem Phosphoranteil größer 80ppm, wobei das Gießsystem wenigstens zwei rohrförmige und/oder teilrohrförmige Keramiktransporteinrichtungen (101, 103, 105) mit jeweils einer Eingießöffnung (107) und einer Auslassöffnung (109) aufweist, **dadurch gekennzeichnet, dass** in die Eingießöffnungen eingegossene Kupferschmelze durch die jeweilige Keramiktransporteinrichtung zur jeweiligen Auslassöffnung transferierbar ist und die jeweilige Keramiktransporteinrichtung mindestens einen Keramikanteil von 80,0Gew.% und einen elektrischen Leitfähigkeitszusatz aufweist, sodass die jeweilige Keramiktransporteinrichtung elektrisch leitfähig ist, und wobei insbesondere die jeweilige Keramiktransporteinrichtung frei von Eisen oder Eisenverbindungen ist, wobei die jeweilige Keramiktransporteinrichtung eine obere elektrische Leiteraufnahme (121) und/oder eine untere elektrische Leiteraufnahme (123) aufweist und die beiden Keramiktransporteinrichtungen jeweils an der oberen elektrischen Leiteraufnahme oder jeweils an der unteren elektrischen Leiteraufnahme elektrisch leitend mittels einer elektrischen Leitverbindung miteinander verbunden sind.

2. Gießsystem (111) nach Anspruch 1, **gekennzeichnet durch** drei, vier, fünf oder mehr rohrförmige und/oder teilrohrförmige Keramiktransporteinrichtungen (101, 103, 105), wobei die drei, vier, fünf oder weiteren Keramiktransporteinrichtungen (101, 103, 105) jeweils eine Eingießöffnung (107) und eine Auslassöffnung (109) aufweisen, wobei in die Eingießöffnungen eingegossene Kupferschmelze durch die jeweilige Keramiktransporteinrichtung zur jeweiligen Auslassöffnung transferierbar ist und die jeweilige Keramiktransporteinrichtung mindestens einen Keramikteil von 80,0Gew.% und einen elektrischen Leifähigkeitszusatz aufweist, sodass die jeweilige Keramiktransporteinrichtung elektrisch leitfähig ist, und wobei insbesondere die jeweilige Keramiktransporteinrichtung frei von Eisen oder Eisenverbindungen ist und die drei, vier, fünf oder weiteren Keramiktransporteinrichtungen (101, 103, 105) jeweils eine obere elektrische Leiteraufnahme (121) und/oder eine untere elektrische Leiteraufnahme (123) aufweisen und die Keramiktransporteinrichtungen jeweils an der oberen elektrischen Leiteraufnahme oder jeweils an der unteren elektrischen Leiteraufnahme elektrisch leitend mittels jeweils einer elektrischen Leitverbindung miteinander verbunden sind.

3. Gießsystem nach einem der vorherigen Ansprüche, **dadurch gekennzeichnet, dass** die Keramiktransporteinrichtungen parallel zueinander angeordnet sind.

4. Gießsystem nach einem der vorherigen Ansprüchen 2 bis 3, **dadurch gekennzeichnet, dass** zwei benachbarte Keramiktransproteinrichtungen jeweils an der oberen elektrischen Leiteraufnahme oder jeweils an der unteren elektrischen Leiteraufnahme elektrisch leitend miteinander verbunden sind, sodass eine elektrische Leitverbindung vorliegt.

5. Gießsystem nach einem der vorherigen Ansprüche, **dadurch gekennzeichnet, dass** der Keramikanteil der Keramiktransporteinrichtungen durch Siliziumcarbid gebildet ist.

6. Gießsystem nach einem der vorherigen Ansprüche, **dadurch gekennzeichnet, dass** der elektrische Leitfähigkeitszusatz der Keramiktransporteinrichtungen durch Kohlenstoff oder freies Silizium gebildet ist.

7. Gießsystem nach Anspruch 6, **dadurch gekennzeichnet, dass** ein Anteil des Kohlenstoffs oder des freien Siliziums Konzentrationswerte zwischen 5,0Gew.% und 20,0Gew.%, insbesondere zwischen 8,0Gew.% und 16,0Gew.%, aufweist.

8. Gießsystem nach einem der vorherigen Ansprüche, **dadurch gekennzeichnet, dass** eine der Keramiktransporteinrichtungen, mehrere der Keramiktransporteinrichtungen oder sämtliche Keramiktransporteinrichtungen Hinterschneidungen aufweist oder aufweisen.

9. Gießsystem nach einem der vorherigen Ansprüche, **dadurch gekennzeichnet, dass** eine der Keramiktransporteinrichtungen, mehrere der Keramiktransporteinrichtungen oder sämtliche Keramiktransporteinrichtungen mittels 3D-Druck gefertigt ist oder sind.

10. Gießsystem nach einem der vorherigen Ansprüche, **dadurch gekennzeichnet, dass** eine der Keramiktransporteinrichtungen, mehrere der Keramiktransporteinrichtungen oder sämtliche Keramiktransporteinrichtungen teilweise eine Öffnung aufweist oder aufweisen, sodass die Keramiktransporteinrichtung oder die Keramiktransporteinrichtungen an der Stelle der Öffnung eine Rinne bildet oder bilden.

11. Gießsystem nach Anspruch 10, **dadurch gekennzeichnet, dass** die elektrische Leitverbindung oder die elektrischen Leitverbindungen einen Kupferleiter oder mehrere Kupferleiter ist oder sind.

## Claims

1. Casting system for casting of copper melts, in particular for casting of phosphorus-containing copper melts with a phosphorus content of greater than 80 ppm, wherein the casting system has at least two pipe-shaped and/or partial-pipe-shaped ceramic transport apparatuses (101, 103, 105) with in each case one pouring port (107) and one outlet port (109), **characterised in that** copper melt poured into the pouring ports can be transferred by means of the respective ceramic transport apparatus to the respective outlet port and the respective ceramic transport apparatus has at least a ceramic content of 80.0 wt.% and an electrical conductivity additive, such that the respective ceramic transport apparatus is electrically conductive, and wherein in particular the respective ceramic transport apparatus is free of iron or iron compounds, wherein the respective ceramic transport apparatus has an upper electrical conductor receiver (121) and/or a lower electrical conductor receiver (123) and the two ceramic transport apparatuses are connected in an electrically conductive manner with one another by means of an electrical conducting connection respectively to the upper electrical conductor receiver or respectively to the lower electrical conductor receiver.

2. Casting system (111) according to claim 1, **characterised by** three, four, five or more pipe-shaped and/or partial-pipe-shaped ceramic transport apparatuses (101, 103, 105), wherein the three, four, five or further ceramic transport apparatuses (101, 103, 105) have respectively one pouring port (107) and one outlet port (109), wherein copper melt poured into the pouring ports can be transferred by means of the respective ceramic transport apparatus to the respective outlet port and the respective ceramic transport apparatus has at least a ceramic content of 80.0 wt.% and an electrical conductivity additive, such that the respective ceramic transport apparatus is electrically conductive, and wherein in particular the respective ceramic transport apparatus is free of iron or iron compounds and the three, four, five or further ceramic transport apparatuses (101, 103, 105) have in each case an upper electrical conductor receiver (121) and/or a lower electrical conductor receiver (123) and the ceramic transport apparatuses are connected in an electrically conductive manner with one another by means of an electrical conducting connection respectively to the upper electrical conductor receiver or respectively to the lower electrical conductor receiver.

3. Casting system according to any of the preceding claims, **characterised in that** the ceramic transport apparatuses are disposed parallel to one another.

4. Casting system according to any of the preceding claims 2 to 3, **characterised in that** two adjacent ceramic transport apparatuses are connected in an electrically conductive manner with one another respectively to the upper electrical conductor receiver or respectively to the lower electrical conductor receiver, such that an electrical conducting connection is present.

5. Casting system according to any of the preceding claims, **characterised in that** the ceramic content of the ceramic transport apparatuses is formed by silicon carbide.

6. Casting system according to any of the preceding claims, **characterised in that** the electrical conductivity additive of the ceramic transport apparatuses is formed by carbon or free silicon.

7. Casting system according to claim 6, **characterised in that** a portion of the carbon or of the free silicon has concentration values between 5.0wt.% and 20.0 wt.%, in particular between 8.0 wt.% and 16.0 wt.%.

8. Casting system according to any of the preceding claims, **characterised in that** one of the ceramic transport apparatuses, several of the ceramic transport apparatuses or all ceramic transport apparatuses has or have undercuts.

9. Casting system according to any of the preceding claims, **characterised in that** one of the ceramic transport apparatuses, several of the ceramic transport apparatuses or all ceramic transport apparatuses is or are manufactured by means of 3D printing.

10. Casting system according to any of the preceding claims, **characterised in that** one of the ceramic transport apparatuses, several of the ceramic transport apparatuses or all ceramic transport apparatuses has or have partially an opening, such that the ceramic transport apparatus or the ceramic transport apparatuses forms or form a channel at the position of the opening.

11. Casting system according to claim 10, **characterised in that** the electrical conducting connection for the electrical conducting connections is or are a copper conductor or several copper conductors.

## Revendications

1. Système de coulée pour la coulée de matières fondues de cuivre, en particulier pour la coulée de matières fondues de cuivre avec du phosphore avec une proportion de phosphore supérieure à 80 ppm, dans lequel le système de coulée présente au moins deux appareils de transport céramiques (101, 103, 105) tubulaires et/ou en partie tubulaires avec respectivement une ouverture d'entrée de coulée (107) et une ouverture de sortie (109), **caractérisé en ce que** la matière fondue de cuivre entrée par coulée dans les ouvertures d'entrée de coulée peut être transférée par l'appareil de transport céramique respectif vers l'ouverture de sortie respective et l'appareil de transport céramique respectif présente au moins une proportion de céramique de 80,0% en poids et un additif de conductivité électrique, de sorte que l'appareil de transport céramique respectif est électro-conducteur, et dans lequel en particulier l'appareil de transport céramique respectif est exempt de fer ou de composés de fer, dans lequel l'appareil de transport céramique respectif présente un logement conducteur électrique supérieur (121) et/ou un logement conducteur électrique inférieur (123) et les deux appareils de transport céramiques sont reliés l'un à l'autre de manière électroconductrice au moyen d'une liaison conductrice électrique respectivement au niveau du logement conducteur électrique supérieur ou respectivement au niveau du logement conducteur électrique inférieur.

2. Système de coulée (111) selon la revendication 1, **caractérisé par** trois, quatre, cinq appareils de transport céramiques (101, 103, 105) tubulaires et/ou en partie tubulaires ou plus, dans lequel les trois, quatre, cinq ou autres appareils de transport céramiques (101, 103, 105) présentent respectivement une ouverture d'entrée de coulée (107) et une ouverture de sortie (109), dans lequel la matière fondue de cuivre entrée par coulée dans les ouvertures d'entrée de coulée peut être transférée par l'appareil de transport céramique respectif vers l'ouverture de sortie respective et l'appareil de transport céramique respectif présente au moins une part de céramique de 80,0% en poids et un additif de conductivité électrique, de sorte que l'appareil de transport céramique respectif est électro-conducteur, et dans lequel en particulier l'appareil de transport céramique respectif est exempt de fer ou de composés de fer et les trois, quatre, cinq ou autres appareils de transport céramiques (101, 103, 105) présentent respectivement un logement conducteur électrique supérieur (121) et/ou un logement conducteur électrique inférieur (123) et les appareils de transport céramiques sont reliés l'un à l'autre de manière électroconductrice au moyen de respectivement une liaison conductrice électrique respectivement au niveau du logement conducteur électrique supérieur ou respectivement au niveau du logement conducteur électrique inférieur.

3. Système de coulée selon l'une quelconque des revendications précédentes, **caractérisé en ce que** les appareils de transport céramiques sont disposés parallèlement les uns aux autres.

4. Système de coulée selon l'une quelconque des revendications 2 à 3, **caractérisé en ce que** deux appareils de transport céramiques voisins sont reliés l'un à l'autre de manière électroconductrice respectivement au niveau du logement conducteur électrique supérieur ou respectivement au niveau du logement conducteur électrique inférieur, de sorte qu'une liaison conductrice électrique est présente.

5. Système de coulée selon l'une quelconque des revendications précédentes, **caractérisé en ce que** la part de céramique des appareils de transport céramiques est formée par du carbure de silicium.

6. Système de coulée selon l'une quelconque des revendications précédentes, **caractérisé en ce que** l'additif de conductivité électrique des appareils de transport céramiques est formé par du carbone ou du silicium libre.

7. Système de coulée selon la revendication 6, **caractérisé en ce qu'**une proportion du carbone ou du silicium libre présente des valeurs de concentration comprises entre 5,0 % en poids et 20,0 % en poids, en particulier entre 8,0 % en poids et 16,0 % en poids.

8. Système de coulée selon l'une quelconque des revendications précédentes, **caractérisé en ce qu'**un des appareils de transport céramiques, plusieurs des appareils de transport céramiques ou tous les appareils de transport céramiques présente ou présentent des dégagements.

9. Système de coulée selon l'une quelconque des revendications précédentes, **caractérisé en ce qu'**un des appareils de transport céramiques, plusieurs des appareils de transport céramiques ou tous les appareils de transport céramiques est ou sont fabriqués au moyen d'une impression 3D.

10. Système de coulée selon l'une quelconque des revendications précédentes, **caractérisé en ce qu'**un des appareils de transport céramiques, plusieurs des appareils de transport céramiques ou tous les appareils de transport céramiques présente ou présentent en partie une ouverture, de sorte que l'appareil de transport céramique ou les appareils de transport céramiques forme ou forment une goulotte à l'emplacement de l'ouverture.

11. Système de coulée selon la revendication 10, **caractérisé en ce que** la liaison conductrice électrique ou les liaisons conductrices électriques est ou sont un conducteur en cuivre ou plusieurs conducteurs en cuivre.
